(19) **Europäisches Patentamt**
**European Patent Office**
**Office européen des brevets**

(11) **EP 1 633 909 B1**

(12) **EUROPEAN PATENT SPECIFICATION**

(45) Date of publication and mention
of the grant of the patent:
**13.05.2009 Bulletin 2009/20**

(51) Int Cl.:
*C25B 1/02* (2006.01)      *C25B 9/00* (2006.01)
*C25B 11/04* (2006.01)

(21) Application number: **03735489.1**

(22) Date of filing: **28.05.2003**

(86) International application number:
**PCT/EP2003/005633**

(87) International publication number:
**WO 2004/106590 (09.12.2004 Gazette 2004/50)**

(54) **ELECTROCHEMICAL OXYGEN SEPARATOR CELL**

ELEKTROCHEMISCHE SAUERSTOFF-TRENNUNGSZELLE

CELLULE ELECTROCHIMIQUE SERVANT A SEPARER DE L'OXYGENE

(84) Designated Contracting States:
**AT BE BG CH CY CZ DE DK EE ES FI FR GB GR HU IE IT LI LU MC NL PT RO SE SI SK TR**

(43) Date of publication of application:
**15.03.2006 Bulletin 2006/11**

(73) Proprietor: **Pirelli & C. S.p.A.**
**20123 Milano (IT)**

(72) Inventors:
• **SIN, Xicola, A.,**
**Pirelli Labs S.p.A.**
**I-20126 Milano (IT)**
• **ZAOPO, Antonio,**
**Pirelli Labs S.p.A.**
**I-20126 Milano (IT)**
• **ANTONUCCI, Vincenzo**
**I-98121 Messina (IT)**

• **ARICO', Antonino, Salvatore**
**I-98125 Contesse (IT)**

(74) Representative: **Bottero, Claudio et al**
**Porta, Checcacci & Associati S.p.A.**
**Via Trebbia, 20**
**20135 Milano (IT)**

(56) References cited:
**WO-A-91/06691**           **US-A- 5 021 137**
**US-A- 5 401 372**         **US-A1- 2003 015 431**

• **WALLER, D., KILNER, J. A., STEELE, B. C. H.: "Oxygen separation using dense gadolinia doped ceria membranes" ELECTROCHEMICAL SOCIETY PROCEEDINGS, vol. 95-24, 1997, pages 48-64, XP001156758 cited in the application**

## Description

The present invention relates to electrochemical cells for separating oxygen from other gases to produce an oxygen-enriched stream or an oxygen-depleted stream.

A large number of commercial processes needs oxygen, oxygen-enriched or oxygen-depleted stream. Examples of industrial processes requiring oxygen enriched stream uses include glass production, petrochemical industry, paper industry, metallurgical industry, aerospace and medical applications. Oxygen depleted streams can be advantageous for lowering the emission of nitrogen oxides ($NO_x$) by diesel engines.

There are many differing methods and apparatus used for separating oxygen from other fluids, such as cryogenic cycles, non-cryogenic air separation plants, including the use of molecular sieves.

One of such methods uses an electrochemical process where an oxygen-containing gaseous mixture, such as air, is fed to one side of a ceramic membrane with an electrical potential applied across the membrane. The oxygen molecules are reduced to oxygen ions at the interface between the cathode and the electrolyte membrane and the oxygen ions can selectively pass through the electrolyte.

After passing through the electrolyte, a further reaction takes place at the interface between the electrolyte and the anode where the oxygen ions are oxidized to reform oxygen molecules. By using of particular electrolyte membranes, only the oxygen ions are allowed to pass through the cell and thus the overall process is very selective for producing a stream with high concentration of oxygen.

In further detail, when an electrical potential is applied across an oxygen ion electrolyte membrane via electrodes, oxygen is dissociated and reduced at the cathode according to the following reaction

$$O_2 + 4e^- \rightarrow 2O^{-2}$$

Oxygen ions migrate through the electrolyte, and are oxidised and recombined at the anode to produce oxygen. An external electrical connection allows the transfer of electrons from the anode to the cathode. The flux of oxygen produced by an electrically driven force is directly proportional to the current passing through the electrolyte membrane according to the Faraday law,

$$mols\, O_2 = \frac{I \times t}{4 \times F}$$

wherein

I is the electrical current (A),
t is time (sec),
F is the Faraday constant (i.e. 96485.3 C/eq) and
4 is the number of electrons exchanged in the electrochemical reaction $2O^{-2} \rightarrow 4e^-{}_+ O_2$, eq/mol.

This means that the flux of oxygen for an applied potential is governed by the electrochemical resistance of the cell (the sum of the electrolyte and electrode polarisation resistance). The $O_2$ flux can be increased by either raising the potential of the electrochemical cell or reducing the resistance of the membrane.

US 5,021,137 (in the name of Ceramatec Inc.) relates to a ceramic solid electrolyte based electrochemical oxygen concentrator cell. The cell is based on a doped cerium oxide ceramic solid electrolyte and lanthanum strontium cobaltite (LSCO) ceramic electrodes. Preferably, cerium oxide is doped with calcium oxide, strontium oxide or yttrium oxide. This cell exhibits a current density of 450 mA/cm$^2$ at 800°C and 1.0V dc operating voltage.

US-A-5 021 137 discloses a ceramic solid electrolyte based electrochemical oxygen concentrator cell and the method for fabricating said cell wherein the cell is based on a doped cerium oxide ceramic solid electrolyte and lanthanum strontium cobaltite ceramic electrodes.

US-A-5 401 372 discloses a process and an apparatus for removing $NO_x$ in an $O_2$-containing exhaust emission based on electrochemically catalytic reduction processes. In particular it discloses an electrochemical cell comprising: (a) a solid electrolyte having sides; (b) an anode on one side of the solid electrolyte; (c) two layers on the side of the solid electrolyte opposite that of the anode, one of said layers is a porous oxide catalyst, and the other layer is an electron conducting layer, said electron conducting layer made from a material selected from the group consisting of lanthanum strontium manganate, lanthanum strontium manganese cobalt oxide, lanthanum strontium cobalt oxide, lanthanum strontium cobalt ferried, platinum and mixtures thereof; and (d) a circuit that applies a potential across said anode and either said porous oxide catalyst or said electron conducting layer.

US 2003/015431 A1 relates to a method for manufacturing thin-film electrochemical devices comprising the steps of forming an anode layer; applying an electrolyte layer to one face of said anode layer, and around said anode layer's edge; applying a cathode layer to a portion of the exposed face of said electrolyte layer, leaving a gap extending from the edge of said face radially inward; applying an interconnect layer to said anode layer, covering the entire exposed surface of said anode layer; and applying an interconnect layer to said cathode layer, and to the remaining exposed electrolyte layer, covering the exposed surface of the electrolyte layer.

D. Waller et al. Steele, Electrochemical Society Proceedings Vol. 95-24 (1997) pp. 48-64 disclose oxygen separation using dense gadolinia doped ceria membranes. More specifically, $Ce_{0.9}Gd_{0.1}O_{1.95}$ (ceria doped with 10% of gadolinia, hereinafter referred to as CGO-10) as electrolyte is screen printed or painted with lanthanum strontium cobalt iron oxide (LSFCO) as electrodes. The X-ray diffraction (XRD) data of the LSFCO electrodes show a polyphase pattern. The current density provides by this construction is of almost 350 mA/cm$^2$ at 800°C and 0.6V dc operating voltage.

This paper reports that for achieving a production of 1 ml of oxygen per minute and per cm$^2$, it is necessary a separator showing a current density of at least 287 mA/cm$^2$. It is established that the electrode resistance is the predominant factor in limiting the oxygen flux through the cell. Reducing the electrode resistance is the key factor in increasing the performance of the cell. The electrolyte resistance constitutes only a small proportion of the overall resistance of the cell; therefore the thickness of the electrolyte may be increased (e.g. from 100 to 250 $\mu$m) to improve the mechanical strength of the cell without giving rise to a large increase in the overall resistance of the cell.

Applicant faced the problem of providing an electrochemical oxygen separator cell with higher performance, in term of current density and, as a consequence, of oxygen separation, with respect to those known in the art.

This problem is solved by providing an electrochemical oxygen separator cell with a specific combination of material for electrolyte membrane and electrodes which yields surprisingly high performances also in the presence of a cell architecture wherein the supporting element is one of the electrode, thus having a thickness greater than that of the electrolyte membrane.

Therefore the present invention relates to an electrochemical oxygen separator cell according to claim 1.

Unless otherwise indicated, in the following of the description lanthanum strontium cobalt iron oxide will be referred to as LSFCO, and lanthanum strontium manganese oxide will be referred to as LSMO.

In the following of the description, cathode and anode could also be referred to as "electrode".

Examples of doped ceria useful in the present invention are gadolinia doped ceria and samaria doped ceria.

The doped ceria is used as electrolyte membrane material is preferably doped in an amount of about 20% by mole. Preferred in this connection is $Ce_{0.8}Gd_{0.2}O_{1.90}$ (hereinafter referred to as CGO-20).

Cathode and anode of the present invention can have the same or different composition and morphology.

Preferably, lanthanum strontium manganese oxide/doped ceria ratio is from about 80:20 to about 70:30 by weight.

Preferably $La_{1-x}Sr_xMnO_{3-\delta}$ is $La_{0.8}Sr_{0.2}MnO_3$ (hereinafter referred to as LSMO-80).

Preferred material for electrode is $La_{1-x}Sr_xFe_{1-y}Co_yO_{3-\delta}$, wherein x and y are independently equal to a value comprised between 0 and 1 included and $\delta$ is from stoichiometry, more preferably $La_{0.6}Sr_{0.4}Fe_{0.8}Co_{0.2}O_{3-\delta}$ (hereinafter referred to as LSFCO-80). Preferably, LSFCO is in single phase belonging to the perovskite family, i.e. a group of compounds of the general formula $ABX_3$ with X most frequently oxygen. Optionally, LSFCO can be added with doped ceria.

Both cathode and anode preferably show a porosity at least of about 20% (measured by SEM).

The electrochemical oxygen separator cell of the invention shows one electrode (supporting electrode) being substantially thicker than the electrolyte membrane. Preferably the supporting electrode is the anode.

For example, the supporting electrode shows a thickness of about 100-600 $\mu$m. For example, the electrolyte membrane has a thickness ranging between about 0.5 $\mu$m and about 20 $\mu$m, more preferably between about 2 $\mu$m and about 10 $\mu$m.

In another aspect the present invention relates to an apparatus according to claim 11, comprising the electrochemical oxygen separator cell disclosed above. Said apparatus may be an engine for vehicle transportation, electrochemical reactors for synthesis of syn-gas from hydrocarbons, alcohols, acids from methane, high purity oxygen supplier for medical applications and for petrochemical, aerospace and metallurgy industries.

One of the applications for the electrochemical oxygen separator cell of the invention is related to the reduction of the contaminant emission in diesel engine, in particular $NO_x$ exhausts and particulates. In this connection, the electrochemical oxygen separator cell finds application in two ways, i.e. enriching or depleting the oxygen flow to the engine. The enriching of oxygen flow to the engine reduces particulate emissions, especially at cold start, increases engine power output, and allows the use of lower-grade fuels.

The depleting of oxygen flow to the engine reduces $NO_x$ emissions without the problems caused by exhaust gas re-circulation (engine wear, oil contamination), and eliminates the need for a heat exchanger to cool exhaust gases before recirculation.

The present invention will be further illustrated by means of the following examples and figures, wherein:

- Figure 1 illustrates an XRD of the CGO powders as prepared in example 1 not in accordance with the current invention treated at different temperatures;
- Figure 2 schematically shows the polarization experimental set-up;
- Figure 3 illustrates the polarization measurement of the electro-chemical oxygen separator cell of Example 1; not in accordance with the current invention;
- Figure 4 illustrates the polarization measurement of the electrochemical oxygen separator cell of Example 2; not in accordance with the current invention;
- Figure 5 illustrates the polarization measurement of the electrochemical oxygen separator cell of Example 3;
- Figure 6 illustrates the polarization measurement of the electrochemical oxygen separator cell of Example 4;
- Figure 7 illustrates the polarization measurement of the electrochemical oxygen separator cell of Example 5;
- Figure 8 illustrates the polarization measurement of the electrochemical oxygen separator cell of Example 6.

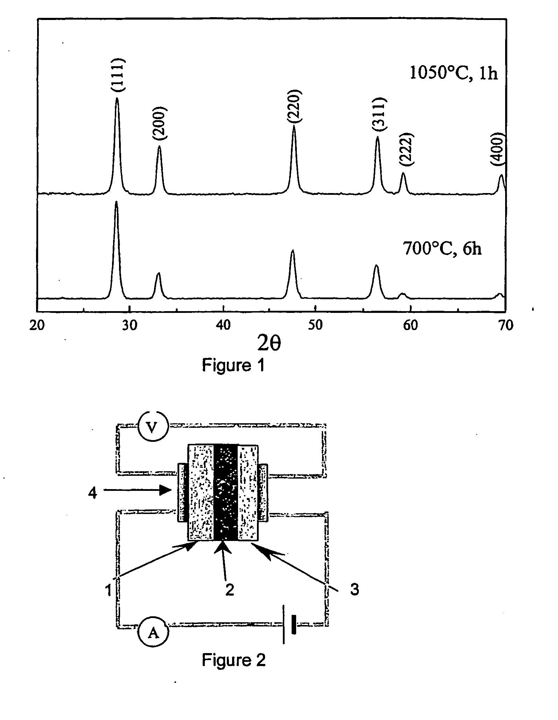

An electrochemical oxygen separator cell according to the schematic drawing of Figure 2 comprises an anode (1), an electrolyte membrane (2), a cathode (3), and metal contacts (4) for the connection to electric circuits.

Example 1, notion accordance with the current invention

LSMO/CGO-CGO-LSMO/CGO (symmetric)

An electrochemical oxygen separator cell with the following structure and composition was prepared and tested:

Cathode: Composition: 30% wt. of CGO-20 + 70% wt of LSMO-80
Thickness: ~20$\mu$m.
Electrolyte membrane: Composition: CGO-20
Thickness: 450$\mu$m
Anode: Composition: 30% wt. of CGO-20 + 70% wt. of LSMO-80
Thickness: ~20$\mu$m.

a) CGO-20 powder synthesis

A solution of 12.6 g of oxalic acid (Aldrich 99.999%) in 250 ml of $H_2O$ was brought to pH=6.5 with NaOH (0.1M) (Aldrich). 8.0. g. of $Ce(NO_3)_3 \cdot 6H_2O$ (Aldrich 99.99%) and 2.078 g $Gd(NO3)_3 \cdot 6H_2O$ (Aldrich 99.99%) were added to 50 ml of $H_2O$ and stirred up to complete dissolution. This cationic solution was dropwise added to the oxalic solution to give a ratio 1 mol $Ce^{3+}$:~6mol $H_2C_2O_4$ and 1 mol $Gd^{3+}$:~6mol $H_2C_2O_4$. The formed precipitate was filtered, thrice washed with water and dried at 100°C for 4 hours. The pH of the water used for washing was up to 6.5. The dried powder was crashed and crystallised at 700°C for 4h. A CGO-20 nanopowder (4 g) was obtained. The nanopowder has a particle size of 26 nm measured from the XRD pattern (Fig.1) by line broadening measurements using the Scherrer equation

$$K \cdot \ell \, / \, \beta \cdot \mathrm{Cos}\, \theta$$

wherein

K is the shape factor of the average crystallite;
$\ell$ is the wavelength,
$\beta$ (rad) is the full width at half maximum of an individual peak , and
$\theta$ (rad) is the peak position ($2\theta/2$).

b) CGO-20 electrolyte membrane preparation.

CGO-20 powder of point a) was thermally treated at 1050°C for 1 h, then uniaxially pressed at 300 MPa, and the resulting pellet was thermally treated at 1550°C for 3 hours to give a membrane about 450 $\mu$m thick, with a relative density (experimental density/theoretical density) higher than 95%.

c) Electrode preparation

30 mg of CGO powders of point a) were mixed in an agata mortar with 70 mg of LSMO-80 (Praxair 99.9%), and added with 1.5 ml of isopropanol (Carlo Erba) in a ultrasonic bath for 10 min to give a slurry. Said slurry was painted on both side of the electrolyte membrane of point b), then dried at 150°C for 1h in air conditions. The electrode and electrode/membrane interface were sintered at 1110°C for 2h in air conditions.

d) Polarisation measurement.

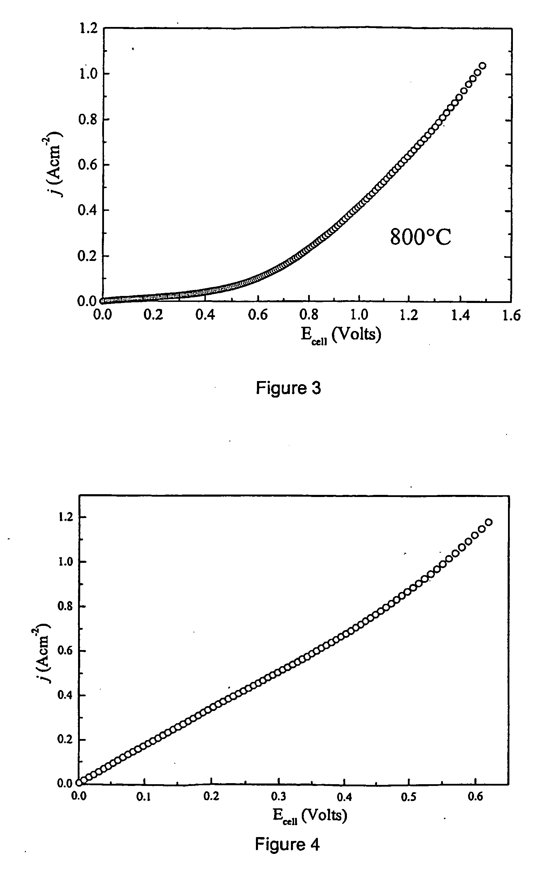

The polarisation measurement was carried out by potentiodynamic measurement [by applying a constant voltage (V) and measuring the current (I)] in a four electrode cell-configuration (Figure 2). The measurements were carried out by an AUTOLAB Ecochemie potentiostat/galvanostat and impedance analyzer, at 800°C. The results are set forth in Figure 3. A current density of 1.0 A/cm$^2$ was observed at 1.4V dc operating voltage.

Example 2, not in accordance with the invention

LSCFO-CGO-LSCFO (symmetric)

An electrochemical oxygen separator cell with the following structure and composition was prepared and tested:

Cathode: Composition: LSCFO -80
Thickness: ~20$\mu$m.
Electrolyte membrane: Composition: CGO-20
Thickness: 450$\mu$m
Anode: Composition: LSCFO -80
Thickness: ~20$\mu$m.

CGO-20 powder and membrane were prepared as from steps a-b) of Example 1.

a) Electrode preparation

LSFCO-80 powder (100 mg; single perovskite phase, primary particle size 9 nm, BET surface area: 4.12 m$^2$/g, Praxair) was homogenised in an agata mortar (with 1.5 ml of isopropanol (Carlo Erba) in an ultrasonic bath for 10 min, to provide a slurry. Both sides of the CGO-20 electrolyte membrane were painted with said slurrys and dried at 150°C for 1 hour in air conditions, then the electrode and electrode/membrane interface were sintered at 1110°C for 2 hours in air conditions.

b) Polarisation measurement.

The cell evaluation was carried out as described in Example 1, d). The results are set forth in Figure 4. A current density of 1.2 A/cm$^2$ was observed at 0.6V dc operating voltage.

Example 3

LSMOICGO-CGO-LSMO/CGO (asymmetric)

An electrochemical oxygen separator cell with the following structure and composition was prepared and tested:

Cathode: Composition: 30% wt. of CGO-20 + 70% wt of LSMO-80
Thickness: -20 $\mu$m.
Electrolyte membrane: Composition: CGO-20
Thickness: 8 $\mu$m
Anode: Composition: 30% wt. of CGO-20 + 70% wt. of LSMO-80
Thickness: -500 $\mu$m.

CGO-20 powder was prepared as from step a) of Example 1.

a) Anode preparation

0.21 g of CGO-20 and 0.49 g of LSMO-80 (Praxair) were mixed in an agata mortar. The mixed powders were are pressed in a cylindrical shape ($\phi$ = 16 mm, d = 1 mm) under uniaxial pressure of 200 MPa for 30 min. The resulting green pellet was sintered at 900°C for 2 hours.

b) Electrolyte membrane preparation

CGO-20 powder (1 g) was mixed with ethanol (2 ml) in a ball mill for 4 hours to give a slurry. Said slurry (0.5g 20 ml of ethanol, and the resulting suspension was placed for 4 hours in an ultrasonic bath. The resulting solution was sprayed by an aerograph device on the anode (supporting electrode) of step a) for 3 min, then sintered at 1300°C for 6 hours.

c) Cathode preparation

0.21 g of CGO-20, made in example 1, a) were mixed in agata mortar with 0.49 g of LSMO-80 (Praxair 99.9%), by adding 2 ml of ethanol, for 4 hours, to give a slurry. Said slurry (0.5 g) was added with 20 ml of ethanol, and the resulting suspension was placed for 4 hours in an ultrasonic bath. The resulting solution was sprayed by an aerograph device on the electrolyte membrane of step b) supported by the anode, for 3 min, then sintered at 1100°C for 1 hour.

d) Polarisation measurement.

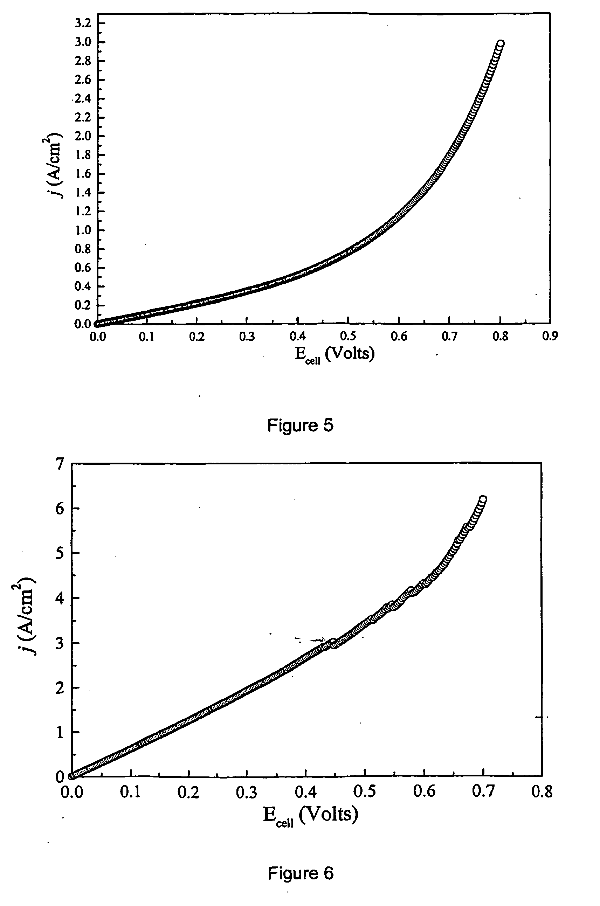

The cell evaluation was carried out as described in Example 1, d). The results are set forth in Figure 5. A current density of 3 A/cm$^2$ was observed at 0.8 V dc operating voltage.

Example 4

LSCFO-CGO-LSCFO/CGO (asymmetric)

An electrochemical oxygen separator cell with the following structure and composition was prepared and tested:

Cathode: Composition: LSCFO-80 -
Thickness: ~20$\mu$m
Electrolyte membrane: Composition: CGO-20
Thickness: 8 $\mu$m
Anode: Composition: 30% wt. of CGO-20 + 70% wt of LSCFO -80
Thickness: -500 $\mu$m.

CGO-20 powder was prepared as from Example 1, a).
The anode was prepared as from Example 3, a) starting from 0.21 g of CGO-20 and 0.49 g of LSCFO-80 (Praxair) which correspond to a 30:70 %wt.
The electrolyte membrane was prepared as from Example 3, b).
The cathode was prepared as from Example 3, c) starting from 1 g of LSCFO-80 (Praxair).
The cell evaluation was carried out as described in Example 1, d). The results are set forth in Figure 6. A current density of 6 A/cm$^2$ was observed at 0.7 V dc operating voltage.

Example 5

LSCFO-CGO-LSMO/CGO (asymmetric)

An electrochemical oxygen separator cell with the following structure and composition was prepared and tested:

Cathode: Composition: LSCFO-80
Thickness: -20 $\mu$m.
Electrolyte membrane: Composition: CGO-20
Thickness: 8$\mu$m
Anode: Composition: 30% wt. of CGO-20 + 70% wt of LSMO-80
Thickness: ~500$\mu$m. -

CGO-20 powder was prepared as from Example 1, a).
The anode was prepared as from Example 3, a) starting from 0.21 g of CGO-20 and 0.49 g of LSMO-80 (Praxair) which correspond to a 30:70 % wt.

The electrolyte membrane was prepared as from Example 3, b).

The cathode was prepared as from Example 3, c) starting from 1 g of LSCFO-80 (Praxair).

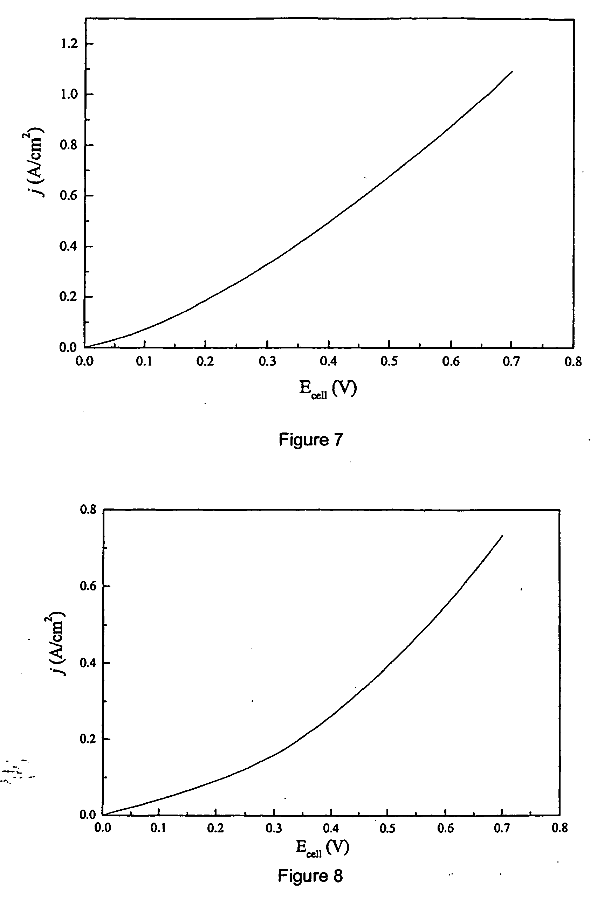

The cell evaluation was carried out as described in Example 1, d). The results are set forth in Figure 7. A current density of 1.5 A/cm$^2$ was observed at 0.7 V dc operating voltage.

Example 6

LSMO/CGO-CGO-LSCFO (asymmetric)

An electrochemical oxygen separator cell with the following structure and composition was prepared and tested:

Cathode: Composition: 30% wt. of CGO-20 + 70% wt of LSMO-80
Thickness: ~500$\mu$m.
Electrolyte membrane: Composition: CGO-20
Thickness: 8$\mu$m
Anode: Composition: LSCFO-80
Thickness: -20 $\mu$m.

CGO-20 powder was prepared as from Example 1, a).

The cathode was prepared as from Example 3, a) starting from 0.21 g of CGO-20 and 0.49 g of LSMO-80 (Praxair) which correspond to a 30:70 % wt.

The electrolyte membrane was prepared as from Example 3, b).

The anode was prepared as from Example 3, c) starting from 1 g of LSCFO-80 (Praxair).

The cell evaluation was carried out as described in Example 1, d),. The results are set forth in Figure 8. A current density of 0.7 A/cm$^2$ was observed at 0.7 V dc operating voltage.

The electrochemical oxygen separator cells of the invention show a current density dramatically higher than that described in the prior documents, obtained at the same voltage.

**Claims**

1. Electrochemical oxygen separator cell including

   - a cathode (3) comprising a material selected from lanthanum strontium manganese oxide/doped ceria In a ratio ringing between 85:15 and 75:25 by weight; and lanthanum strontium cobalt iron oxide;
   - an electrolyte membrane (2) comprising ceria doped from 15 to 25% by mole;
   - an anode (1) comprising a material selected from lanthanum strontium manganese oxide/doped ceria in a ratio ranging between about 85:15 and about 75:25 by weight; and lanthanum strontium cobalt iron oxide;

   wherein at least one of cathode (3) and anode (1) is thicker than the electrolyte membrane (2).

2. Electrochemical oxygen separator cell according to claim 1 wherein ceria is doped with an oxide selected from gadolinia and samaria.

3. Electrochemical oxygen separator cell according to claim 1 wherein ceria is doped at 207.by mole.

4. Electrochemical oxygen separator cell according to claim 1 wherein In the doped ceria of the electrolyte membrane is $Ce_{0.8}Gd_{0.2}O_{1.90}$.

5. Electrochemical oxygen separator cell according to claim 1 wherein lanthanum strontium manganese oxide/doped ceria ratio ranging between 80:20 to 70:30 by weight.

6. Etectrochemical oxygen separator cell according to claim 1 wherein lanthanum strontium manganese oxide is $La_{0.8}Sr_{0.2}MnO_3$.

7. Electrochemical oxygen separator cell according to claim 1 wherein cathode (3) or anode or (1) both comprises lanthanum strontium cobalt iron oxide.

**8.** Electrochemical oxygen separator cell according to claims 7 wherein lanthanum strontium cobalt iron oxide is $La_{0.6}Sr_{0.4}Fe_{0.8}Co_{0.2}O_3$.

**9.** Electrochemical oxygen separator cell according to claim 1 wherein lanthanum strontium cobalt Iron oxide is added with doped ceria.

**10.** Electrochemical oxygen separator cell according to claim 1 wherein the anode (1) is thicker than the electrolyte membrane.

**11.** Apparatus comprising an electrochemical oxygen separator cell as described in the preceding claims.

**Patentansprüche**

**1.** Elektrochemische Sauerstoff-Trennungszelle, die einschließt:

- eine Kathode (3), die ein Material ausgewählt aus Lanthan-Strontrium-Mangan-Oxid/dotiertes Ceroxid in einem Verhältnis, das in einem Bereich zwischen 85:15 und 75:25, bezogen auf das Gewicht, liegt; und Lanthan-Strontium-Kobalt-Eisen-Oxid umfaßt;
- eine Elektrolytmembran (2), die Ceroxid umfaßt, das von 15 bis 25 mol% dotiert ist;
- eine Anode (1), die ein Material ausgewählt aus Lanthan-Strontrium-Mangan-oxid/dotiertes Ceroxid in einem Verhältnis, das in einem Bereich zwischen etwa 85:15 und etwa 75:25, bezogen auf das Gewicht, liegt; und Lanthan-Strontium-Kobalt-Eisen-Oxid umfaßt;

wobei mindestens eines von der Kathode (3) und Anode (1) dicker ist als die Elektrolytmembran (2).

**2.** Elektrochemische Sauerstoff-Trennungszelle gemäß Anspruch 1, in der Ceroxid mit einem Oxid ausgewählt aus Gadoliniumoxid und Samariumoxid dotiert ist.

**3.** Elektrochemische Sauerstoff-Trennungszelle gemäß Anspruch 1, in der Ceroxid zu 20 mol% dotiert ist.

**4.** Elektrochemische Sauerstoff-Trennungszelle gemäß Anspruch 1, in der in dem dotierten Ceroxid der Elektrolytmembran $Ce_{0.8}Gd_{0.2.}O_{1.90}$ vorliegt.

**5.** Elektrochemische Sauerstoff-Trennungszelle gemäß Anspruch 1, in der das Verhältnis von Lanthan-Strontrium-Mangan-Oxid/dotiertes Ceroxid in einem Bereich zwischen 80:20 bis 70:30, bezogen auf das Gewicht, liegt.

**6.** Elektrochemische Sauerstoff-Trennungszelle gemäß Anspruch 1, in der das Lanthan-Strontrium-Mangan-Oxid $La_{0.8}Sr_{0.2}MnO_3$ ist.

**7.** Elektrochemische Sauerstoff-Trennungszelle gemäß Anspruch 1, in der die Kathode (3) oder Anode (1) oder beide Lanthan-Strontium-Kobalt-Eisen-Oxid umfassen.

**8.** Elektrochemische Sauerstoff-Trennungszelle gemäß Anspruch 7, in der das Lanthan-Strontium-Kobalt-Eisen-Oxid $La_{0.6}Sr_{0.4}Fe_{0.8}Co_{0.2}O_3$ ist.

**9.** Elektrochemische Sauerstoff-Trennungszelle gemäß Anspruch 1, in der das Lanthan-Strontium-Kobalt-Eisen-Oxid mit dotiertem Ceroxid zugesetzt wird.

**10.** Elektrochemische Sauerstoff-Trennungszelle gemäß Anspruch 1, in der die Anode (1) dicker ist als die Elektrolytmembran.

**11.** Apparat, der eine elektrochemische Sauerstoff-Trennungszelle, wie in den vorhergehenden Ansprüchen beschrieben, umfaßt.

**Revendications**

1. Cellule électrochimique de séparateur d'oxygène, comprenant :

   - une cathode (3) comprenant un matériau choisi parmi un mélange d'oxyde de lanthane-strontium-manganèse et d'oxyde de cérium dopé, en un rapport pondéral du premier au second de 85/15 à 75/25, et un oxyde de lanthane-strontium-cobalt-fer ;
   - une membrane électrolyte (2), comprenant de l'oxyde de cérium dopé à raison de 15 à 25 % en moles ;
   - et une anode (1) comprenant un matériau choisi parmi un mélange d'oxyde de lanthane-strontium-manganèse et d'oxyde de cérium dopé, en une proportion pondérale du premier au second d'environ 85/15 à environ 75/25, et un oxyde de lanthane-strontium-cobalt-fer ;

   dans laquelle au moins l'une de la cathode (3) et de l'anode (1) est plus épaisse que la membrane électrolyte (2).

2. Cellule électrochimique de séparateur d'oxygène, conforme à la revendication 1, dans laquelle l'oxyde de cérium est dopé avec un oxyde choisi parmi de l'oxyde de gadolinium et de l'oxyde de samarium.

3. Cellule électrochimique de séparateur d'oxygène, conforme à la revendication 1, dans laquelle l'oxyde de cérium est dopé à raison de 20 % en moles.

4. Cellule électrochimique de séparateur d'oxygène, conforme à la revendication 1, dans laquelle l'oxyde de cérium dopé de la membrane électrolyte a pour formule $Ce_{0,8}Gd_{0,2}O_{1,90}$.

5. Cellule électrochimique de séparateur d'oxygène, conforme à la revendication 1, dans laquelle le rapport pondéral de l'oxyde de lanthane-strontium-manganèse à l'oxyde de cérium dopé vaut de 80/20 à 70/30.

6. Cellule électrochimique de séparateur d'oxygène, conforme à la revendication 1, dans laquelle l'oxyde de lanthane-strontium-manganèse a pour formule $La_{0,8}Sr_{0,2}MnO_3$.

7. Cellule électrochimique de séparateur d'oxygène, conforme à la revendication 1, dans laquelle la cathode (3) ou l'anode (1), ou les deux, comprend, ou comprennent, un oxyde de lanthane-strontium-cobalt-fer.

8. Cellule électrochimique de séparateur d'oxygène, conforme à la revendication 7, dans laquelle l'oxyde de lanthane-strontium-cobalt-fer a pour formule $La_{0,6}Sr_{0,4}Fe_{0,8}Co_{0,2}O_3$.

9. Cellule électrochimique de séparateur d'oxygène, conforme à la revendication 1, dans laquelle de l'oxyde de cérium dopé a été ajouté à l'oxyde de lanthane-strontium-cobalt-fer.

10. Cellule électrochimique de séparateur d'oxygène, conforme à la revendication 1, dans laquelle l'anode (1) est plus épaisse que la membrane électrolyte.

11. Appareil comprenant une cellule électrochimique de séparateur d'oxygène, conforme à l'une des revendications précédentes.

Figure 1

Figure 2

Figure 3

Figure 4

Figure 5

Figure 6

Figure 7

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5021137 A
- US 5401372 A

- US 2003015431 A1

**Non-patent literature cited in the description**

- **D. WALLER et al.** *Steele, Electrochemical Society Proceedings,* 1997, vol. 95 (24), 48-64